(19) **Europäisches Patentamt European Patent Office Office européen des brevets**

(11) **EP 3 037 206 B1**

(12) **EUROPEAN PATENT SPECIFICATION**

(45) Date of publication and mention of the grant of the patent:
**16.10.2019 Bulletin 2019/42**

(21) Application number: **15003485.8**

(22) Date of filing: **04.12.2015**

(51) Int Cl.:
*B23K 35/30* (2006.01)      *B23K 35/36* (2006.01)
*B23K 35/362* (2006.01)    *C22C 38/18* (2006.01)
*C22C 38/22* (2006.01)     *C22C 38/26* (2006.01)
*C22C 38/28* (2006.01)     *C22C 38/30* (2006.01)
*C22C 38/40* (2006.01)     *C22C 38/44* (2006.01)
*C22C 38/48* (2006.01)     *C22C 38/50* (2006.01)
*C22C 38/52* (2006.01)     *C22C 38/58* (2006.01)

(54) **LOW-HYDROGEN COATED ELECTRODE**

ELEKTRODE MIT EINER BESCHICHTUNG MIT GERINGER WASSERSTOFFKONZENTRATION

ÉLECTRODE REVÊTUE À FAIBLE CONCENTRATION EN HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2014 JP 2014263678**

(43) Date of publication of application:
**29.06.2016 Bulletin 2016/26**

(73) Proprietor: **Kabushiki Kaisha Kobe Seiko Sho (Kobe Steel, Ltd.)**
**Kobe-shi, Hyogo 651-8585 (JP)**

(72) Inventors:
• **BANNO, Yasutaka**
  **Fujisawa-shi**
  **Kanagawa 251-8551 (JP)**
• **YAMASHITA, Ken**
  **Fujisawa-shi**
  **Kanagawa 251-8551 (JP)**

(74) Representative: **Müller-Boré & Partner**
**Patentanwälte PartG mbB**
**Friedenheimer Brücke 21**
**80639 München (DE)**

(56) References cited:
GB-A- 2 072 710     JP-A- H0 542 390
JP-A- S54 118 354    JP-A- S60 166 196

**Description**

TECHNICAL FIELD

The present invention relates to a low-hydrogen coated electrode.

BACKGROUND ART

Conventionally, a low-hydrogen coated electrode is used for welding of a high Cr ferrite heat-resistant steel mainly applied to pipe arrangements in a thermal power generation boiler.

For example, Patent Document 1 discloses a coated electrode obtained by coating the outer periphery of a steel core wire with a covering material containing a metal carbonate: from 30 to 60 wt%, a metal fluoride: from 10 to 30 wt% and, in addition, an arc stabilizer, a slag forming agent and a binder except for those above, such that the coating accounts for 22 to 40 wt% relative to the total weight of the electrode. This coated electrode is a low-hydrogen coated electrode for the welding of a 9Cr steel, in which the covering material contains $Mg_2Si$: from 0.1 to 10 wt% and both or either one of the covering material and the steel core wire contain, relative to the total weight of the electrode, C: from 0.01 to 0.10 wt%, Si: from 0.4 to 2.2 wt%, Mn: from 1.0 to 1.9 wt%, Cr: from 5.9 to 9.8 wt%, Mo: from 0.3 to 1.2 wt%, N: from 0.04 to 0.09 wt% , and one element or two or more elements selected from the group consisting of Ni: from 0.2 to 1.0 wt%, V: from 0.1 to 0.4 wt%, Nb: from 0.02 to 0.1 wt%, and W: from 1.1 to 2.1 wt%.

In the low-hydrogen coated electrode for the welding of a 9Cr steel described in Patent Document 1, the wt% (coverage) of the covering material relative to the total weight of the coated electrode is set to a range of 22 to 40 wt% and from 30 to 60 wt% of Ca carbonate, Ba carbonate, Mg carbonate, etc. is added as a metal carbonate to the covering material, whereby a good welding workability is ensured.

PRIOR ART DOCUMENT

Patent Document

[Patent Document 1] JP-A-5-42390

SUMMARY OF THE INVENTION

Problems that the Invention is to Solve
However, the conventional techniques have the following problems.
In the coated electrode described in Patent Document 1, when Cr is incorporated into the core wire, the coating decomposes along with Joule heat generation in the core wire during welding, and a phenomenon called "electrode burning" occurs. In this case, a sound protective tube is not formed, and the welding workability is significantly degraded by, for example, a decrease in arc stability and an increase of spatter. As a result, a desired weld metal cannot be obtained.
In addition, the conventional techniques never suggest a finding that a resistance to the electrode burning is remarkably improved in a low-hydrogen coated electrode for a high Cr ferrite heat-resistant steel as in the present invention, i.e., the electrode burning resistance is improved by optimizing the design of the covering material.
Furthermore, it is also required for the coated electrode to have an excellent coatability with little surface unevenness and a good appearance and to generate no defect in the weld metal.
The present invention has been made by taking these circumstances into consideration. An object of the present invention is to provide a low-hydrogen coated electrode excellent in the electrode burning resistance and the coatability and capable of giving a weld metal with an excellent defect resistance.

Means for Solving the Problems

The present inventors have conducted experiments and studies on various electrodes so as to attain the above-described object, i.e., to develop a low-hydrogen coated electrode for a high Cr ferrite heat resistant steel, which is less likely to cause an electrode burning than ever. Specifically, experiments and studies have been made to investigate the relationship between the requirements on a coated electrode and the occurrence or no occurrence of the electrode burning. As a result, the following facts have been found.
    1. The electrode burning resistance is enhanced by properly determining (coating diameter)/(core wire diameter) that is a ratio when the diameter of the electrode is defined as a coating diameter and the diameter of the core wire

**EP 3 037 206 B1**

is defined as a core wire diameter.
2. The electrode burning resistance is enhanced by properly determining the density of the covering material.
3. The electrode burning resistance is enhanced by properly determining the kind of carbonate in a flux.

With respect to 1, the occurrence or no occurrence of the electrode burning was examined by increasing or decreasing the value of (coating diameter)/(core wire diameter).

With respect to 2, the occurrence or no occurrence of the electrode burning was examined by changing the density of the covering material.

With respect to 3, the occurrence or no occurrence of the electrode burning was examined by changing the kind of carbonate that is a major constituent component of the flux.

The present invention has been accomplished based on the examination results.

The low-hydrogen coated electrode (hereinafter, sometimes referred to as "coated electrode" or simply as "electrode") according to the present invention is a low-hydrogen coated electrode including a core wire and a covering material, in which either the core wire or both of the core wire and the covering material consists of, as alloy components, C: from 0.01 to 0.15 mass%, Si: from 0.5 to 1.5 mass%, Mn: from 0.4 to 2.0 mass%, Cr: from 3.0 to 9.0 mass%, Mo: from 0.01 to 1.50 mass%, and Fe: from 55 to 70 mass%, optionally Ni: 1.0 mass% or less, optionally Ti: 0.5 mass% or less, optionally V: 0.5 mass% or less, optionally Nb: 0.5 mass% or less, optionally N: 0.10 mass% or less, optionally Co: 2.0 mass% or less, and optionally W: 2.0 mass% or less, per total mass of the low-hydrogen coated electrode, and unavoidable impurities such as P and S, the covering material contains, as flux components, Ca carbonate: from 1 to 6 mass% in terms of $CO_2$, a metal fluoride: from 1 to 4 mass% in terms of F, and $SiO_2$: from 5 to 15 mass%, per total mass of the low-hydrogen coated electrode, the covering material contains substantially no carbonate except for the Ca carbonate, and the low-hydrogen coated electrode satisfies either one or both of a requirement that when a diameter of the low-hydrogen coated electrode is defined as a coating diameter and a diameter of the core wire is defined as a core wire diameter, a ratio of the coating diameter to the core wire diameter (in the present description, also referred to as "(coating diameter)/(core wire diameter)") is from 1.50 to 1.80, and a requirement that the covering material has a density of from 0.200 to 0.260 $g/cm^3$.

According to this configuration, the low-hydrogen coated electrode contains C, Si, Mn, Cr, Mo, and Fe each in a predetermined amount, whereby the strength, creep strength, toughness, corrosion resistance, and defect resistance of the weld metal are improved and in addition, an insulating property of the covering material is enhanced.

In the low-hydrogen coated electrode, the Ca carbonate content in terms of $CO_2$, the metal fluoride content in terms of F, and the $SiO_2$ content are specified, whereby the welding workability and detachability of solidified slag are improved and a bead appearance of the weld metal becomes good. In addition, spatter generation is suppressed.

In the low-hydrogen coated electrode, the covering material contains substantially no carbonate except for the Ca carbonate, whereby the electrode burning resistance is enhanced.

The low-hydrogen coated electrode satisfies both of a requirement on (coating diameter)/(core wire diameter) and a requirement on the density of the covering material, whereby the electrode burning resistance and coatability are enhanced and not only the defect resistance of the weld metal is improved but also a good bead appearance is obtained. In addition, spatter generation is suppressed.

In the low-hydrogen coated electrode according to the present invention, it is preferred that the Cr content is from 5.0 to 9.0 mass% per total mass of the low-hydrogen coated electrode and either one or both of the core wire and the covering material further contain, as alloy components, Ni: 1.0 mass% or less, Ti: 0.5 mass% or less, V: 0.5 mass% or less, and Nb: 0.5 mass% or less, per total mass of the low-hydrogen coated electrode.

According to this configuration, in the low-hydrogen coated electrode, the Cr content is from 5.0 to 9.0 mass%, whereby the corrosion resistance is more enhanced. In addition, the low-hydrogen coated electrode contains Ni, Ti, V, and Nb each in a predetermined amount, whereby the creep strength and the toughness of the weld metal are improved.

In the low-hydrogen coated electrode, either one or both of the core wire and the covering material preferably further contain, as an alloy component, N: 0.10 mass% or less per total mass of the low-hydrogen coated electrode.

According to this configuration, the low-hydrogen coated electrode contains N in a predetermined amount, whereby the creep strength, the toughness and blow hole resistance of the weld metal are enhanced.

In the low-hydrogen coated electrode, either one or both of the core wire and the covering material preferably further contain, as alloy components, Co: 2.0 mass% or less and W: 2.0 mass% or less, per total mass of the low-hydrogen coated electrode.

According to this configuration, the low-hydrogen coated electrode contains Co and W each in a predetermined amount, whereby the creep strength and the toughness of the weld metal are enhanced.

Advantage of the Invention

The low-hydrogen coated electrode according to the present invention is excellent in the electrode burning resistance, so that an excellent welding workability can be ensured. In addition, the low-hydrogen coated electrode according to the present invention is excellent in the coatability, so that a weld metal excellent in the defect resistance can be obtained.

## Mode for Carrying Out the Invention

The embodiment of the present invention is described in detail below.

In the coated electrode of the present invention, either one or both of the core wire and the covering material contains, as alloy components, C, Si, Mn, Cr, Mo, and Fe each in a predetermined amount per total mass of the coated electrode. In the coated electrode, the covering material contains, as flux components, Ca carbonate, a metal fluoride and $SiO_2$ each in a predetermined amount per total mass of the coated electrode. Here, the Ca carbonate content is in terms of $CO_2$ and the metal fluoride content is in terms of F.

In the coated electrode, the covering material contains substantially no carbonate except for the Ca carbonate.

The coated electrode satisfies either one or both of a requirement that when the diameter of the coated electrode is defined as a coating diameter and the diameter of the core wire is defined as a core wire diameter, the ratio of the coating diameter to the core wire diameter is from 1.50 to 1.80, and a requirement that the density of the covering material is from 0.200 to 0.260g/cm$^3$.

The reason for adding each alloy element and the reason for limiting the composition are described in detail below. These elements may be added to either one or both of the core wire and the covering material.

[C: from 0.01 to 0.15 mass%]

C is one of elements for stabilizing austenite and has an effect of enhancing the strength of the weld metal. In addition, C has an action of suppressing δ ferrite responsible for low toughness. If the C content is less than 0.01 mass%, the above-described effects are not brought out. On the other hand, if the content exceeds 0.15 mass%, a solidification cracking susceptibility rises and the amount of carbide precipitated is increased to elevate the strength and deteriorate the toughness of the weld metal. Therefore, the C content is set to be from 0.01 to 0.15 mass% per total mass of the coated electrode. From the standpoint of more reliably preventing the above-described problems due to excessive addition, the C content is preferably 0.12 mass% or less. In the case of adding C through the covering material, this element may be added in the form of being incorporated into other metal raw materials.

[Si: from 0.5 to 1.5 mass%]

Si functions as a deoxidizer to enhance the strength and the toughness of the weld metal. In addition, Si greatly affects a crater formation and is an indispensable component for vertical upward welding. If the Si content is less than 0.5 mass%, the effects above are not brought out. On the other hand, if the content exceeds 1.5 mass%, an excessive rise in the strength occurs to deteriorate the toughness. Therefore, the Si content is set to be from 0.5 to 1.5 mass% per total mass of the coated electrode. From the standpoint of more reliably preventing the above-described problem due to excessive addition, the Si content is preferably 1.0 mass% or less. In the case of adding Si through the covering material, this element may be added in the form of Fe-Si, etc.

[Mn: from 0.4 to 2.0 mass%]

Mn lowers the A1 transformation point and the bainite transformation initiation temperature to thereby refine the bainite structure and, as with Si, functions as a deoxidizer to enhance the strength and the toughness of the weld metal. If the Mn content is less than 0.4 mass%, the effects above are not brought out. On the other hand, if the content exceeds 2.0 mass%, deterioration of the creep strength is caused. Therefore, the Mn content is set to be from 0.4 to 2.0 mass% per total mass of the coated electrode. From the standpoint of more reliably preventing the above-described problem due to excessive addition, the Mn content is preferably 1.5 mass% or less. In the case of adding Mn through the covering material, this element may be added in the form of Fe-Mn, metallic Mn, etc.

[Cr: from 3.0 to 9.0 mass%]

Cr has an effect of enhancing the corrosion resistance of the weld metal and maintaining the creep strength by solid-solution hardening. If the Cr content is less than 3.0 mass%, the effects above are not brought out. On the other hand, if the content exceeds 9.0 mass%, the toughness is deteriorated due to a precipitation of δ ferrite. Therefore, the Cr content is set to be from 3.0 to 9.0 mass% per total mass of the coated electrode. In particular, when a higher corrosion resistance is required, the Cr content is preferably 5.0 mass% or more and 9.0 mass% or less. In the case of adding Cr through the covering material, this element may be added in the form of Fe-Cr, metallic Cr, etc.

[Mo: from 0.01 to 1.50 mass%]

Mo has an effect of dissolving in solid in the Cr carbide or the matrix in the course of PWHT (Post Weld Heat Treatment) and thereby maintaining the creep strength of the weld metal. If the Mo content is less than 0.01 mass%, the effect above is not brought out. On the other hand, if the content exceeds 1.50 mass%, the toughness is deteriorated due to an excessive rise in the strength. Therefore, the Mo content is set to be from 0.01 to 1.50 mass% per total mass of the coated electrode. From the standpoint of more reliably preventing the above-described problem due to excessive addition, the Mo content is preferably 1.0 mass% or less. In the case of adding Mo through the covering material, this element may be added in the form of Fe-Mo alloy, etc.

[Fe: from 55 to 70 mass%]

Fe can be added as an iron powder or Fe alloy in the core wire and covering material. If the Fe content is less than 55 mass%, the amount of slag is excessively increased to readily generate a defect such as slag entrainment, whereas if the content exceeds 70 mass%, the insulating property of the covering material deteriorates. For this reason, the Fe content is set to be from 55 to 70 mass% per total mass of the coated electrode.
In the coated electrode, either one or both of the core wire and the covering material preferably further contain, as alloy components, Ni, Ti, V, and Nb each in a predetermined amount per total mass of the coated electrode. In the case of containing Ni, Ti, V, and Nb each in a predetermined amount, the Cr content is preferably set to be 5.0 mass% or more and 9.0 mass% or less per total mass of the coated electrode. Here, as for Ni, Ti, V, and Nb, it may also be possible to contain any one or more of these components.

[Ni: 1.0 mass% or less]

Ni is not an essential element but functions as an element for stabilizing the austenite and inhibits a δ ferrite phase responsible for a low toughness from remaining. On the other hand, excessive addition of this component deteriorates the creep strength. Therefore, in the case of a component system where the δ ferrite phase readily precipitates, Ni is preferably added in an amount of not exceeding 1.0 mass% per total mass of the coated electrode. From the standpoint of more reliably preventing the above-described problem due to excessive addition, the Ni content is more preferably 0.6 mass% or less. In the case of adding Ni through the covering material, this element may be added in the form of metallic Ni, Ni-Mg, etc.

[Ti: 0.5 mass% or less]

Ti is not an essential element but forms a fine carbonitride in the course of solidification during welding and during PWHT and thereby enhances the creep strength. On the other hand, excessive addition of this component causes an extreme rise in the strength of the weld metal and deteriorates the toughness. Therefore, when higher creep strength is required, Ti is preferably added in an amount of not exceeding 0.5 mass% per total mass of the coated electrode. From the standpoint of more reliably preventing the above-described problem due to excessive addition, the Ti content is more preferably 0.3 mass% or less. In the case of adding Ti through the covering material, this element may be added in the form of Fe-Ti, etc.

[V: 0.5 mass% or less]

V is not an essential element but forms a carbonitride in the course of PWHT and thereby enhances the creep strength of the weld metal. On the other hand, excessive addition of this component causes an extreme increase in the amount of carbonitride precipitated and elevates the strength of the weld metal to deteriorate the toughness. Therefore, when a higher creep strength is required, V is preferably added in an amount of not exceeding 0.5 mass% per total mass of the coated electrode. From the standpoint of more reliably preventing the above-described problem due to excessive addition, the V content is more preferably 0.3 mass% or less. In the case of adding V through the covering material, this element may be added in the form of Fe-V, etc.

[Nb: 0.5 mass% or less]

Nb is not an essential element but, as with V, forms a carbonitride in the course of PWHT and thereby enhances the creep strength of the weld metal. On the other hand, excessive addition of this component causes an extreme increase in the amount of carbonitride precipitated and elevates the strength of the weld metal to deteriorate the toughness. Therefore, when a higher creep strength is required, Nb is preferably added in an amount of not exceeding 0.5 mass% per total mass of the coated electrode. From the standpoint of more reliably preventing the above-described problem due to excessive addition, the Nb content is more preferably 0.3 mass% or less, still more preferably 0.1 mass% or less. In the case of adding Nb through the covering material, this element may be added in the form of Fe-Nb, etc.

In the coated electrode, either one or both of the core wire and the covering material preferably further contain, as an alloy component, N in a predetermined amount per total mass of the coated electrode.

[N: 0.10 mass% or less]

N is not an essential element but forms a carbonitride by bonding with Cr, etc. in the course of PWHT and thereby enhances the creep strength of the weld metal. On the other hand, excessive addition of this component causes an increase in the amount of carbonitride precipitated and elevates the strength of the weld metal to deteriorate the toughness. Furthermore, if the N content is increased, an $N_2$ gas is evolved in the molten metal during welding to generate a blow hole. Therefore, when a higher creep strength is required, N is preferably added in an amount of not exceeding 0.10 mass% per total mass of the coated electrode. From the standpoint of more reliably preventing the above-described problems due to excessive addition, the N content is more preferably 0.05 mass% or less. In the case of adding N through the covering material, this element may be added in the form of Cr-N, etc.

In the coated electrode, either one or both of the core wire and the covering material preferably further contain, as alloy components, Co and W each in a predetermined amount per total mass of the coated electrode. Here, as for Co and W, it may also be possible to contain any one or more of these components.

[Co: 2.0 mass% or less]

Co is not an essential element but functions as an element for stabilizing the austenite and inhibits a $\delta$ ferrite phase from remaining. On the other hand, excessive addition of this component causes an extreme rise in the strength of the weld metal to deteriorate the toughness. Therefore, in the case of a component system where the $\delta$ ferrite phase readily precipitates, Co is preferably added in an amount of not exceeding 2.0 mass% per total mass of the coated electrode. From the standpoint of more reliably preventing the above-described problem due to excessive addition, the Co content is more preferably 1.0 mass% or less. Furthermore, from the standpoint of more enhancing the effects above, addition in an amount of 0.1 mass% or more is preferred. In the case of adding Co through the covering material, this element may be added in the form of metallic Co, etc.

[W: 2.0 mass% or less]

W is not an essential element but, as with Mo, has an effect of maintaining the creep strength by solid-solution hardening. On the other hand, excessive addition of this component causes a rise in the strength and a precipitation of $\delta$ ferrite and thereby deteriorates the toughness. Therefore, in the case where a higher creep strength is required, W is preferably added in an amount of not exceeding 2.0 mass% per total mass of the coated electrode. From the standpoint of more reliably preventing the above-described problem due to excessive addition, the W content is more preferably 1.5 mass% or less. In the case of adding W through the covering material, this element may be added in the form of Fe-W, etc.

[Other Components]

Out of alloy components, other components are unavoidable impurities such as P and S, and the contents of these components are preferably reduced as much as possible.

The reason for adding each element in the covering material (flux) and the reason for limiting the composition are described in detail below.

[Ca Carbonate content in terms of $CO_2$: from 1 to 6 mass%]

If the Ca carbonate content in terms of $CO_2$ is less than 1 mass%, the viscosity of a molten slag becomes excessively low, thereby the slag is likely to precede during welding, deteriorating the welding workability and also the detachability of solidified slag is deteriorated. On the other hand, if the content exceeds 6 mass%, the viscosity of the molten slag becomes excessively high and not only the spatter is increased but also the bead appearance is degraded. Therefore, the Ca carbonate content is set to be, in terms of $CO_2$, from 1 to 6 mass% per total mass of the coated electrode. From the standpoint of more reliably preventing the above-described problems due to excessive addition, the Ca carbonate content is preferably 5 mass% or less in terms of $CO_2$.

In the present invention, only Ca carbonate is used as the metal carbonate, and the covering material contains substantially no carbonate except for the Ca carbonate. The reason therefor is because the electrode burning occurs when Ba carbonate and Mg carbonate each having a lower decomposition temperature than Ca carbonate, and Sr carbonate are used individually or simultaneously as the metal carbonate in the flux. In order to maintain the electrode burning resistance, the metal carbonate applied needs to be substantially only Ca carbonate. Here, "contains substantially no" indicates that the content of the metal carbonate except for Ca carbonate is suppressed to 0.1 mass% or less per total mass of the coated electrode. More specifically, "contains substantially no" means that a carbonate except for Ca carbonate is contained in an amount of 0.1 mass% or less in terms of $CO_2$ as an unavoidable impurity. As long as the content of the carbonate except for Ca carbonate is up to 0.1 mass% in terms of $CO_2$, the electrode burning resistance is not deteriorated.

[Metal fluoride content in terms of F: from 1 to 4 mass%]

If the metal fluoride content is less than 1 mass% in terms of F, the viscosity of the molten slag becomes excessively high, and the bead appearance is degraded. On the other hand, if the content exceeds 4 mass%, the viscosity of the molten slag becomes excessively low and the welding workability deteriorates. Therefore, the metal fluoride content is set to be, in terms of F, from 1 to 4 mass% per total mass of the coated electrode. From the standpoint of more reliably preventing the above-described problem due to excessive addition, the metal fluoride content is preferably 3 mass% or less in terms of F. The metal fluoride may be added in the form of $CaF_2$, etc.

[$SiO_2$: from 5 to 15 mass%]

If the $SiO_2$ content is less than 5 mass%, the welding workability deteriorates and at the same time, the bead appearance is also degraded. On the other hand, if the content exceeds 15 mass%, the viscosity of the molten slag becomes excessively low, and not only the detachability of solidified slag is degraded but also the amount of the spatter generated increases. Therefore, the $SiO_2$ content is set to be from 5 to 15 mass% per total mass of the coated electrode.

[Other Components]

As other components, an arc stabilizer and a slag forming agent (e.g., MgO) except for Ca carbonate, metal fluoride and $SiO_2$, and an alkali metal oxide such as $Na_2O$, $K_2O$ and $Li_2O$ are contained in the covering material.

The reasons for limiting a numerical value of the (coating diameter)/(core wire diameter) and the density of the covering material are described in detail below. Either one or both of the requirements thereon must be satisfied.

[(Coating diameter)/(core wire diameter): from 1.50 to 1.80]

The requirement on the (coating diameter)/(core wire diameter) is from 1.50 to 1.80. If the (coating diameter)/(core wire diameter) is less than 1.50, the function as a protective tube becomes insufficient due to the electrode burning and not only deterioration of the arc stability and increase of the spatter are caused but also the amount of the slag formed falls short to degrade the bead appearance. On the other hand, if the ratio exceeds 1.80, the amount of the slag becomes excessively large and, as a result, a defect such as slag entrainment is readily generated. At the same time, the electrode becomes difficult to handle in the case of application to a weld joint having a narrow groove width. Therefore, the (coating diameter)/(core wire diameter) is set to be from 1.50 to 1.80. From the standpoint of more enhancing the above-described effect, the (coating diameter)/(core wire diameter) is preferably 1.55 or more, more preferably 1.60 or more.

The present invention is directed to a core wire having a nominal diameter of 2.5 to 5.0 mm as specified by AWS. As for the coating diameter, two axes crossing at right angles in the central part of the electrode are measured for the diameters by a micrometer, and the average value thereof is adopted. As for the core wire diameter, two axes crossing at right angles in the central part of the core wire are measured for the diameters by a micrometer, and the average value thereof is adopted.

[Density of covering material: from 0.200 to 0.260g/cm³]

The density of the covering material is from 0.200 to 0.260g/cm³. In the present invention, the density of the covering material is adjusted by controlling the particle size of the carbonate that is a major constituent component of the flux. More specifically, the density of the covering material can be reduced by mainly applying, as the carbonate, carbonate particles having a rough particle size (particle size constitution: the constituent ratio of 75 μm or less is 40%, the constituent ratio of more than 75 $\mu$m and 106 $\mu$m or less is 20%, the constituent ratio of more than 106 $\mu$m and 150 $\mu$m or less is 20%, and the constituent ratio of more than 150 $\mu$m is 20%). The density of the covering material can be increased by mainly applying, as the carbonate, carbonate particles having a fine particle size (particle size constitution: the constituent ratio of 75 $\mu$m or less is 100%). In this connection, during production of an actual product of the covering material, the density of the covering material is affected not only by the particle size of the carbonate in the covering material but also by the particle sizes of other fluxes. As regards the production conditions during coating, there is generally a tendency that when the coating pressure is high, the density becomes also high, and when the pressure is low, the density becomes also low.

If the density of the covering material is less than 0.200 g/cm$^3$, the coatability of the electrode is deteriorated, and the electrode comes to have a significant surface unevenness, leading to deterioration of the appearance. On the other hand, if the density exceeds 0.260 g/cm$^3$, the heat radiation performance of the covering material is reduced to readily allow for occurrence of the electrode burning, the function as a protective tube becomes insufficient due to the electrode burning and, as a result, the arc stability deteriorates and the spatter increases. Therefore, the density of the covering material is set to be from 0.200 to 0.260g/cm$^3$.

The density d of the covering material as used herein means a value determined by d=Mf/Vf (g/cm$^3$) in which Mf is the mass and Vf is the volume of the covering material per one electrode. Here, Mf and Vf are determined as follows.

$$Mf=Me-Mr \ (g)$$

$$Vf=\{(De/2)-(Dr/2)\}^2 \times \pi \times L \ (cm^3)$$

  Me: unit weight of electrode (g)
  Mr: unit weight of core wire (g)
  De: coating diameter (cm)
  Dr: core wire diameter (cm)
  L: coating length (cm)

<Production Method of Coated Electrode>

The coated electrode of the present invention can be produced, for example, as follows.

The periphery of a steel core wire is covered and coated with the above-described covering material by means of a normal electrode coater by using a binder such as water glass represented by sodium silicate or potassium silicate. The coated wire is then baked at 400 to 550°C to remove water.

Examples

With respect to Examples falling in the scope of the present invention, the effects thereof are described below by comparison with Comparative Examples outside the scope of the present invention.

The outer periphery of a core wire containing from 2.0 to 10.0 mass% of Cr per total mass of the core wire was coated with a covering material to produce a coated electrode in which the (coating diameter)/(core wire diameter), the density of the covering material, the kind of carbonate in the covering material, and the chemical component composition were as shown in Tables 1 and 2. Various electrodes produced were subjected to a welding test by using a Cr-Mo steel plate as the matrix, and the results in Table 3 were obtained. All specimens (Nos. 1 to 29) were evaluated by using a core wire with the diameter of 3.2 mm. It was separately confirmed that those exhibiting good results for respective evaluation items when using a core wire with the diameter of 3.2 mm have the same properties when using core wires with diameters of 2.5 mm, 4.0 mm and 5.0 mm.

Welding conditions are as follows.

[Welding Conditions]

Current used:

  Core wire diameter $\phi$2.5 mm: from 40 to 100 A
  Core wire diameter $\phi$3.2 mm: from 60 to 130 A

Core wire diameter φ4.0 mm: from 80 to 170 A
Core wire diameter φ5.0 mm: from 150 to 230 A

Preheating interpass temperature: from 200 to 250°C

Welding posture:

All postures (All specimens (Nos. 1 to 29) were evaluated by vertical upward welding, and it was separately confirmed that those exhibiting good results for respective evaluation items in vertical upward welding have the same properties in all postures.)

In the welding test, the following items were observed with an eye and rated by sensory evaluation.

[Electrode Burning Resistance]

The specimens were welded until the residual length of the electrode became 50 mmL. On this occasion, a specimen where the electrode burning was not generated and a protective tube was formed was rated A, and a specimen where the electrode burning occurred and a protective tube was not formed was rated B. Here, the length of the core wire used was 300 mmL for φ2.5 mm, 350 mmL for φ3.2 mm, and 400 mmL for φ4.0 mm and φ5.0 mm.

[Slag Entrainment]

A specimen where slag entrainment did not occur at either polarity of alternating current or direct current was rated A, and a specimen where slag entrainment occurred was rated B.

[Coatability]

A specimen exhibiting good coatability at any coating diameter was rated A, and a specimen exhibiting poor coatability was rated B.

[Overall Evaluation]

A specimen with ratings of A in all items out of three items above was rated A, and a specimen with a rating of B in any one item was rated B.

The conditions of the coated electrode are shown in Tables 1 and 2, and the evaluation results are shown in Table 3. In Table 1, the numerical value, etc. not satisfying the scope of the present invention is underlined. In Table 2, "-" indicates that the component is not contained. In addition, the flux component includes an arc stabilizer, a slag forming agent (e.g., MgO) and an alkali metal oxide such as $Na_2O$, $K_2O$ and $Li_2O$, and the alloy component includes unavoidable impurities such as P and S. Furthermore, in Table 1, Carbonate is the value in terms of $CO_2$, and in Tables 1 and 2, Flux Component and Alloy Component are the content per total mass of the electrode.

[Table 1]

| No. | (Coating Diameter)/ (Core Wire Diameter) | Density of Covering Material (g/cm³) | Kind of Carbonate in Covering Material | Flux component (mass%) | | | | | |
|---|---|---|---|---|---|---|---|---|---|
| | | | | Carbonate (in terms of $CO_2$) | Carbonate (before conversion) | Metal Fluoride (in terms of F) | Metal Fluoride (before conversion) | $SiO_2$ | Others |
| 1 | 1.45 | 0.230 | Ca carbonate | 1 | 2.3 | 4 | 8 | 10 | 6 |
| 2 | 1.50 | 0.230 | Ca carbonate | 1 | 2.3 | 2 | 4 | 15 | 6 |
| 3 | 1.65 | 0.230 | Ca carbonate | 3 | 6.9 | 4 | 8 | 15 | 5 |
| 4 | 1.80 | 0.230 | Ca carbonate | 2 | 4.6 | 4 | 8 | 10 | 4 |
| 5 | 1.85 | 0.230 | Ca carbonate | 2 | 4.6 | 2 | 4 | 10 | 5 |
| 6 | 1.45 | 0.230 | Ca carbonate | 6 | 13.8 | 4 | 8 | 5 | 5 |
| 7 | 1.50 | 0.230 | Ca carbonate | 5 | 11.5 | 4 | 8 | 5 | 6 |
| 8 | 1.65 | 0.230 | Ca carbonate | 6 | 13.8 | 4 | 8 | 5 | 4 |
| 9 | 1.80 | 0.230 | Ca carbonate | 6 | 13.8 | 2 | 4 | 5 | 5 |
| 10 | 1.85 | 0.230 | Ca carbonate | 6 | 13.8 | 4 | 8 | 5 | 3 |
| 11 | 1.65 | 0.195 | Ca carbonate | 1 | 2.3 | 4 | 8 | 15 | 4 |
| 12 | 1.65 | 0.200 | Ca carbonate | 1 | 2.3 | 2 | 4 | 15 | 5 |
| 13 | 1.65 | 0.260 | Ca carbonate | 1 | 2.3 | 4 | 8 | 14 | 4 |
| 14 | 1.65 | 0.265 | Ca carbonate | 2 | 4.6 | 4 | 8 | 15 | 3 |
| 15 | 1.65 | 0.195 | Ca carbonate | 2 | 4.6 | 1 | 2 | 15 | 4 |
| 16 | 1.65 | 0.200 | Ca carbonate | 6 | 13.8 | 4 | 8 | 5 | 3 |
| 17 | 1.65 | 0.260 | Ca carbonate | 5 | 11.5 | 4 | 8 | 5 | 3 |
| 18 | 1.65 | 0.265 | Ca carbonate | 6 | 13.8 | 4 | 8 | 5 | 4 |
| 19 | 1.45 | 0.195 | Ca carbonate | 2 | 4.6 | 2 | 4 | 15 | 4 |
| 20 | 1.45 | 0.265 | Ca carbonate | 6 | 13.8 | 4 | 8 | 5 | 4 |
| 21 | 1.85 | 0.195 | Ca carbonate | 5 | 11.5 | 4 | 8 | 5 | 3 |

(continued)

| Carbonate (in terms of $CO_2$) | Carbonate (before conversion) | Metal Fluoride (in terms of F) | Metal Fluoride (before conversion | $SiO_2$ | Others | | | | |
|---|---|---|---|---|---|---|---|---|---|
| 22 | <u>1.85</u> | <u>0.265</u> | Ca carbonate | 6 | 13.8 | 4 | 8 | 5 | 3 |
| 23 | 1.65 | 0.230 | Mg carbonate | 6 | 13.8 | 1 | 2 | 5 | 4 |
| 24 | 1.65 | 0.230 | Ba carbonate | 6 | 13.8 | 4 | 8 | 5 | 4 |
| 25 | 1.65 | 0.230 | Sr carbonate | 1 | 2.3 | 4 | 8 | 15 | 4 |
| 26 | 1.65 | 0.230 | <u>Ca carbonate,<br>Mg carbonate</u> | 1 | 2.3 | 2 | 4 | 15 | 5 |
| 27 | 1.65 | 0.230 | Ca carbonate | 1 | 2.3 | 4 | 8 | 15 | 4 |
| 28 | 1.65 | 0.230 | Ca carbonate | 2 | 4.6 | 4 | 8 | 15 | 3 |
| 29 | 1.65 | 0.230 | Ca carbonate | 2 | 4.6 | 2 | 4 | 15 | 7 |

[Table 2]

| No. | Alloy Component (mass%) | | | | | | | | | | | | |
|---|---|---|---|---|---|---|---|---|---|---|---|---|---|
| | C | Si | Mn | Cr | Mo | Fe | Ni | Ti | V | Nb | N | Co | W |
| 1 | 0.01 | 1.4 | 0.4 | 8.5 | 0.05 | 63 | - | - | - | - | - | - | - |
| 2 | 0.05 | 1.2 | 0.4 | 9.0 | 0.01 | 62 | - | - | - | - | - | - | - |
| 3 | 0.05 | 1.2 | 0.4 | 8.4 | 0.01 | 55 | - | - | - | - | - | - | - |
| 4 | 0.04 | 0.9 | 0.6 | 8.8 | 0.02 | 63 | - | - | - | - | - | - | - |
| 5 | 0.02 | 1.4 | 0.6 | 3.8 | 0.04 | 70 | - | - | - | - | - | - | - |
| 6 | 0.10 | 0.5 | 1.7 | 3.0 | 1.50 | 61 | - | - | - | - | - | - | - |
| 7 | 0.15 | 0.5 | 2.0 | 3.4 | 1.10 | 62 | - | - | - | - | - | - | - |
| 8 | 0.15 | 0.6 | 2.0 | 4.1 | 1.30 | 61 | - | - | - | - | - | - | - |
| 9 | 0.13 | 0.5 | 2.0 | 3.2 | 1.30 | 65 | - | - | - | - | - | - | - |
| 10 | 0.13 | 0.6 | 1.9 | 3.2 | 1.30 | 63 | - | - | - | - | - | - | - |
| 11 | 0.01 | 1.4 | 0.4 | 8.5 | 0.05 | 60 | - | - | - | - | - | - | - |
| 12 | 0.05 | 1.5 | 0.4 | 9.0 | 0.01 | 62 | - | - | - | - | - | - | - |
| 13 | 0.05 | 1.3 | 0.4 | 9.0 | 0.01 | 60 | - | - | - | - | - | - | - |
| 14 | 0.04 | 1.4 | 0.6 | 8.8 | 0.02 | 58 | - | - | - | - | - | - | - |
| 15 | 0.10 | 0.5 | 1.7 | 3.0 | 1.50 | 67 | - | - | - | - | - | - | - |
| 16 | 0.15 | 0.5 | 2.0 | 3.4 | 1.10 | 63 | - | - | - | - | - | - | - |
| 17 | 0.15 | 0.7 | 2.0 | 4.1 | 1.30 | 64 | - | - | - | - | - | - | - |
| 18 | 0.13 | 0.7 | 2.0 | 3.2 | 1.30 | 61 | - | - | - | - | - | - | - |
| 19 | 0.10 | 0.5 | 1.7 | 3.0 | 1.50 | 65 | - | - | - | - | - | - | - |
| 20 | 0.15 | 0.5 | 2.0 | 3.4 | 1.10 | 62 | - | - | - | - | - | - | - |
| 21 | 0.15 | 0.7 | 2.0 | 4.1 | 1.30 | 64 | - | - | - | - | - | - | - |
| 22 | 0.13 | 0.7 | 2.0 | 3.2 | 1.30 | 62 | - | - | - | - | - | - | - |
| 23 | 0.01 | 1.4 | 0.4 | 8.5 | 0.05 | 64 | - | - | - | - | - | - | - |
| 24 | 0.05 | 1.5 | 0.4 | 9.0 | 0.01 | 58 | - | - | - | - | - | - | - |
| 25 | 0.05 | 1.3 | 0.4 | 9.0 | 0.01 | 59 | - | - | - | - | - | - | - |
| 26 | 0.04 | 1.4 | 0.6 | 8.8 | 0.02 | 62 | - | - | - | - | - | - | - |
| 27 | 0.06 | 0.7 | 0.6 | 7.2 | 0.60 | 60 | 0.3 | 0.1 | 0.1 | 0.1 | - | - | - |
| 28 | 0.08 | 0.6 | 0.8 | 8.1 | 0.60 | 58 | 0.3 | 0.1 | 0.1 | 0.1 | 0.02 | - | - |
| 29 | 0.05 | 1.4 | 1.3 | 8.5 | 0.60 | 55 | 0.3 | 0.1 | 0.1 | 0.1 | 0.02 | 0.6 | 1.2 |

[Table 3]

| No. | Electrode Burning Resistance | Slag Entrainment | Coatability | Overall Evaluation |
|---|---|---|---|---|
| 1 | A | A | A | A |
| 2 | A | A | A | A |
| 3 | A | A | A | A |
| 4 | A | A | A | A |

(continued)

| No. | Electrode Burning Resistance | Slag Entrainment | Coatability | Overall Evaluation |
|---|---|---|---|---|
| 5 | A | A | A | A |
| 6 | A | A | A | A |
| 7 | A | A | A | A |
| 8 | A | A | A | A |
| 9 | A | A | A | A |
| 10 | A | A | A | A |
| 11 | A | A | A | A |
| 12 | A | A | A | A |
| 13 | A | A | A | A |
| 14 | A | A | A | A |
| 15 | A | A | A | A |
| 16 | A | A | A | A |
| 17 | A | A | A | A |
| 18 | A | A | A | A |
| 19 | B | A | B | B |
| 20 | B | A | A | B |
| 21 | A | B | B | B |
| 22 | B | B | A | B |
| 23 | B | A | A | B |
| 24 | B | A | A | B |
| 25 | B | A | A | B |
| 26 | B | A | A | B |
| 27 | A | A | A | A |
| 28 | A | A | A | A |
| 29 | A | A | A | A |

As shown in Tables 1 to 3, in Nos. 1 to 18 and 27 to 29 satisfying the scope of the present invention, good results were obtained in all evaluation items.

On the other hand, Nos. 19 to 26 not satisfying the scope of the present invention exhibited the following results.

In No. 19, both the (coating diameter)/(core wire diameter) and the density of the covering material were out of the specification ranges. As a result, the electrode burning occurred because the value of the (coating diameter)/(core wire diameter) was less than the lower limit, and the coatability was poor because the value of the density of the covering material was less than the lower limit.

In No. 20, both the (coating diameter)/(core wire diameter) and the density of the covering material were out of the specification ranges. As a result, the electrode burning occurred because the value of the (coating diameter)/(core wire diameter) was less than the lower limit and the value of the density of the covering material exceeded the upper limit.

In No. 21, both the (coating diameter)/(core wire diameter) and the density of the covering material were out of the specification ranges. As a result, slag entrainment occurred because the value of the (coating diameter)/(core wire diameter) exceeded the upper limit, and the coatability was poor because the value of the density of the covering material was less than the lower limit.

In No. 22, both the (coating diameter)/(core wire diameter) and the density of the covering material were out of the specification ranges. As a result, slag entrainment occurred because the value of the (coating diameter)/(core wire diameter) exceeded the upper limit, and the electrode burning occurred because the value of the density of the covering material exceeded the upper limit.

In Nos. 23 to 26 where the covering material contains a carbonate other than Ca carbonate, the electrode burning occurred. Here, the amount of Mg carbonate in No. 26 exceeded 0.1 mass%.

The present invention is characterized by the value of the (coating diameter)/(core wire diameter), the density of covering material and the kind of carbonate, and therefore, Comparative Examples where the contents of alloy component and flux component are out of the specification ranges are not described. When these are out of the specification ranges, the results are as described above in the reason for adding each alloy element and the reason for limiting the composition as well as in the reason for adding each element in the covering material (flux) and the reason for limiting the composition.

While the invention has been described in detail by referring to the embodiments and Examples, the gist of the present invention is not limited to the above-described contents, and the range of the right thereof should be extensively interpreted based on the description in the scope of claims. It is needless to say that changes, modifications, etc. can be widely made in the contents of the present invention based on the descriptions above.

## Claims

1.  A low-hydrogen coated electrode comprising a core wire and a covering material, wherein either the core wire or both of the core wire and the covering material consists of, as alloy components,
    C: from 0.01 to 0.15 mass%,
    Si: from 0.5 to 1.5 mass%,
    Mn: from 0.4 to 2.0 mass%,
    Cr: from 3.0 to 9.0 mass%,
    Mo: from 0.01 to 1.50 mass%,
    Fe: from 55 to 70 mass%,
    optionally Ni: 1.0 mass% or less,
    optionally Ti: 0.5 mass% or less,
    optionally V: 0.5 mass% or less,
    optionally Nb: 0.5 mass% or less,
    optionally N: 0.10 mass% or less,
    optionally Co: 2.0 mass% or less, and
    optionally W: 2.0 mass% or less, per total mass of the low-hydrogen coated electrode, and unavoidable impurities such as P and S,
    the covering material contains, as flux components,
    Ca carbonate: from 1 to 6 mass% in terms of $CO_2$,
    a metal fluoride: from 1 to 4 mass% in terms of F and
    $SiO_2$: from 5 to 15 mass%, per total mass of the low-hydrogen coated electrode,
    the covering material contains substantially no carbonate except for the Ca carbonate, and
    the low-hydrogen coated electrode satisfies both of a requirement that when a diameter of the low-hydrogen coated electrode is defined as a coating diameter and a diameter of the core wire is defined as a core wire diameter, a ratio of the coating diameter to the core wire diameter is from 1.50 to 1.80, and a requirement that the covering material has a density of from 0.200 to 0.260 $g/cm^3$.

2.  The low-hydrogen coated electrode according to Claim 1, wherein
    the Cr content is from 5.0 to 9.0 mass% per total mass of the low-hydrogen coated electrode and
    either one or both of the core wire and the covering material contain, as alloy components,
    Ni: 1.0 mass% or less,
    Ti: 0.5 mass% or less,
    V: 0.5 mass% or less, and
    Nb: 0.5 mass% or less, per total mass of the low-hydrogen coated electrode.

3.  The low-hydrogen coated electrode according to Claim 1, wherein either one or both of the core wire and the covering material contain, as an alloy component, N: 0.10 mass% or less per total mass of the low-hydrogen coated electrode.

4.  The low-hydrogen coated electrode according to Claim 2, wherein either one or both of the core wire and the covering material contain, as an alloy component, N: 0.10 mass% or less per total mass of the low-hydrogen coated electrode.

5.  The low-hydrogen coated electrode according to any one of Claims 1 to 4,

wherein either one or both of the core wire and the covering material contain,
as alloy components,
Co: 2.0 mass% or less and
W: 2.0 mass% or less, per total mass of the low-hydrogen coated electrode.

**Patentansprüche**

1.  Elektrode mit einer Beschichtung mit geringer Wasserstoffmenge, umfassend einen Kerndraht und ein Beschichtungsmaterial, wobei
    entweder der Kerndraht oder sowohl der Kerndraht als auch das Beschichtungsmaterial als Legierungsbestandteile aus
    C: von 0,01 bis 0,15 Massen%,
    Si: von 0,5 bis 1,5 Massen%,
    Mn: von 0,4 bis 2,0 Massen%,
    Cr: von 3,0 bis 9,0 Massen%,
    Mo: von 0,01 bis 1,50 Massen%,
    Fe: von 55 bis 70 Massen%,
    gegebenenfalls Ni: 1,0 Massen% oder weniger,
    gegebenenfalls Ti: 0,5 Massen% oder weniger,
    gegebenenfalls V: 0,5 Massen% oder weniger,
    gegebenenfalls Nb: 0,5 Massen% oder weniger,
    gegebenenfalls N: 0,10 Massen% oder weniger,
    gegebenenfalls Co: 2,0 Massen% oder weniger, und
    gegebenenfalls W: 2,0 Massen% oder weniger, bezogen auf die Gesamtmasse der Elektrode mit einer Beschichtung mit geringer Wasserstoffmenge,
    und unvermeidbaren Verunreinigungen wie P und S, besteht/bestehen,
    wobei das Beschichtungsmaterial als Flussmittelbestandteile enthält:

    Ca-Carbonat: von 1 bis 6 Massen%, bezogen auf $CO_2$,
    ein Metallfluorid: von 1 bis 4 Massen%, bezogen auf F und
    $SiO_2$: von 5 bis 15 Massen%, bezogen auf die Gesamtmasse der Elektrode mit einer Beschichtung mit geringer Wasserstoffmenge,
    wobei das Beschichtungsmaterial im Wesentlichen kein Carbonat mit Ausnahme des Ca-Carbonats enthält, und
    die Elektrode mit einer Beschichtung mit geringer Wasserstoffmenge sowohl eine Anforderung erfüllt, dass wenn ein Durchmesser der Elektrode mit einer Beschichtung mit geringer Wasserstoffmenge als Beschichtungsdurchmesser definiert ist und ein Durchmesser des Kerndrahts als Kerndrahtdurchmesser definiert ist, ein Verhältnis des Beschichtungsdurchmessers zum Kerndrahtdurchmesser von 1,50 bis 1,80 beträgt, als auch eine Anforderung erfüllt, dass das Beschichtungsmaterial eine Dichte von 0,200 bis 0,260 $g/cm^3$ aufweist.

2.  Elektrode mit einer Beschichtung mit geringer Wasserstoffmenge nach Anspruch 1, wobei
    der Cr-Gehalt von 5,0 bis 9,0 Massen%, bezogen auf die Gesamtmasse der Elektrode mit einer Beschichtung mit geringer Wasserstoffmenge, beträgt und entweder eines oder beide des Kerndrahts und des Beschichtungsmaterial als Legierungsbestandteile enthält/enthalten:

    Ni: 1,0 Massen% oder weniger,
    Ti: 0,5 Massen% oder weniger,
    V: 0,5 Massen% oder weniger, und
    Nb: 0,5 Massen% oder weniger, bezogen auf die Gesamtmasse der Elektrode mit einer Beschichtung mit geringer Wasserstoffmenge.

3.  Elektrode mit einer Beschichtung mit geringer Wasserstoffmenge nach Anspruch 1, wobei entweder eines oder beide des Kerndrahts und des Beschichtungsmaterial als Legierungsbestandteile enthält/enthalten:
    N: 0.10 Massen% oder weniger, bezogen auf die Gesamtmasse der Elektrode mit einer Beschichtung mit geringer Wasserstoffmenge.

4.  Elektrode mit einer Beschichtung mit geringer Wasserstoffmenge nach Anspruch 2, wobei entweder eines oder beide des Kerndrahts und des Beschichtungsmaterial als Legierungsbestandteile enthält/enthalten:

N: 0.10 Massen% oder weniger, bezogen auf die Gesamtmasse der Elektrode mit einer Beschichtung mit geringer Wasserstoffmenge.

**5.** Elektrode mit einer Beschichtung mit geringer Wasserstoffmenge nach einem Ansprüche 1 bis 4 der wobei entweder eines oder beide des Kerndrahts und des Beschichtungsmaterial als Legierungsbestandteile enthält/enthalten:

Co: 2,0 Massen% oder weniger und
W: 2,0 Massen% oder weniger, bezogen auf die Gesamtmasse der Elektrode mit einer Beschichtung mit geringer Wasserstoffmenge.

## Revendications

**1.** Electrode revêtue à faible teneur en hydrogène comprenant un fil central et un matériau de recouvrement dans laquelle
soit le fil central ou les deux du fil central et du matériau de recouvrement consiste(nt) en, en composé d'alliage,
C : de 0,01 à 0,15% en masse,
Si : de 0,5 à 1,5% en masse,
Mn : de 0,4 à 2,0% en masse,
Cr : de 3,0 à 9,0% en masse,
Mo : de 0,01 à 1,50% en masse,
Fe : de 55 à 70% en masse,
optionnellement Ni : 1,0% en masse ou moins,
optionnellement Ti : 0,5% en masse ou moins,
optionnellement V : 0,5% en masse ou moins,
optionnellement Nb : 0,5% en masse ou moins,
optionnellement N : 0,10% en masse ou moins,
optionnellement Co : 2,0% en masse ou moins,
optionnellement W : 2,0% en masse ou moins, par rapport à la masse totale de l'électrode revêtue à faible teneur en hydrogène,
et d'inévitables impuretés telles que P et S,
le matériau de recouvrement contient, en composé de flux,
carbonate de Ca : de 1 à 6% en masse en terme de $CO_2$,
un fluorure métallique : de 1 à 4% en masse en terme de F et
$SiO_2$ : de 5 à 15% en masse, par rapport à la masse totale de l'électrode revêtue à faible teneur en hydrogène,
le matériau de revêtement contient substantiellement aucun carbonate à l'exception du carbonate de Ca, et
l'électrode revêtue à faible teneur en hydrogène satisfait les deux d'un critère de, quand un diamètre de l'électrode revêtue à faible teneur en hydrogène est défini comme diamètre de revêtement et un diamètre du fil central est défini comme diamètre de fil central, un rapport du diamètre de revêtement sur le diamètre de fil central est de 1,50 à 1,80, et un critère que le matériau de recouvrement a une densité de 0,200 à 0,260 $g/cm^3$.

**2.** Electrode revêtue à faible teneur en hydrogène selon la revendication 1, dans laquelle la teneur en Cr est de 5,0 à 9,0% en masse par rapport à la masse totale de l'électrode revêtue à faible teneur en hydrogène et
l'un ou les deux du fil central et du matériau de recouvrement contient, en composé d'alliage,
Ni : 1,0% en masse ou moins,
Ti : 0,5% en masse ou moins,
V : 0,5% en masse ou moins, et
Nb : 0,5% en masse ou moins, par rapport à la masse totale de l'électrode revêtue à faible teneur en hydrogène.

**3.** Electrode revêtue à faible teneur en hydrogène selon la revendication 1, dans laquelle l'un ou les deux du fil central et du matériau de recouvrement contient, en composé d'alliage,
N : 0,10% en masse ou moins par rapport à la masse totale de l'électrode revêtue à faible teneur en hydrogène.

**4.** Electrode revêtue à faible teneur en hydrogène selon la revendication 2, dans laquelle l'un ou les deux du fil central et du matériau de recouvrement contient, en composé d'alliage,
N : 0,10% en masse ou moins par rapport à la masse totale de l'électrode revêtue à faible teneur en hydrogène.

**5.** Electrode revêtue à faible teneur en hydrogène selon l'une quelconque des revendications 1 à 4, dans laquelle l'un ou les deux du fil central et du matériau de recouvrement contient, en composé d'alliage,

Co : 2,0% en masse ou moins et

W : 2,0% en masse ou moins, par rapport à la masse totale de l'électrode revêtue à faible teneur en hydrogène.

**EP 3 037 206 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5042390 A